# EUROPEAN PATENT SPECIFICATION

(11) **EP 2 375 113 B1**
(45) Date of publication and mention of the grant of the patent: **28.11.2012**
(21) Application number: 10003704.3
(22) Date of filing: 06.04.2010
(51) Int. Cl.: F16K 1/52

(54) **Double regulating balancing valve**
Doppelgegendruckregelventil
Soupape d'équilibrage de régulation double

(43) Date of publication of application: 12.10.2011
(60) Divisional application: 12177561.3
(73) Proprietor: Honeywell Technologies Sarl, 1180 Rolle (CH)
(72) Inventor: Svejnoha, Petr, 68201 Vyskov (CZ); Borastero, Ivan, 68301 Rousinov, Vyskov (CZ)
(74) Representative: Sturm, Christoph

(56) References cited:
- DE-A1- 4 407 447
- DE-A1-102007 050 454
- GB-A- 1 513 503

## Description

The invention relates to a double regulating balancing valve as defined in the preamble of claim 1 and in document GB 1 513 503, for example.

Double regulating balancing valves are used in hydronic heating or cooling installations, for example in two-pipe heating systems, for providing a so-called hydronic balance within the heating or cooling installation. The hydronic balance is a significant requirement for an efficient operation of a hydronic heating or cooling installation. In for example unbalanced heating installations not having the hydronic balance under provisions and/or over provisions of hot water to individual radiators of the heating installation can occur. In order to avoid such under provisions and/or over provisions double regulating balancing valves are used. Such double regulating balancing valves provide a precise regulation of flow through the heating or cooling installation.

Double regulating balancing valves known from practical use comprise a valve housing and a valve plunger. The valve housing provides a valve seat. The valve plunger acts together with the valve seat. The valve is closed when the valve plunger is pressed against the valve seat. The valve is opened when the valve plunger is lifted up from the valve seat. Further on, double regulating balancing valves known from practical use comprise a valve insert comprising a spring positioned inside an insert body of the valve insert. A spring force provided by said spring acts in such a way on a valve stem to which the valve plunger is mounted that the spring force tends to lift up the valve plunger from the valve seat and thereby tends to open the valve.

Double regulating balancing valves known from practical use further comprise a hand wheel acting together with a force transmitting screw. The force transmitting screw acts in such a way on the valve stem and thereby on the spring that the force transmitting screw compresses the spring against the spring force depending on the position of the hand wheel. A presetting screw provides a stop for the force transmitting screw in such a way that the position of the presetting screw limits the movement of the force transmitting screw and thereby of the valve stem in opening direction of the valve. The hand wheel provides a first regulating function of a double regulating balancing valve, namely in such a way that the operating of the hand wheel causes a movement of the force transmitting screw, whereby the movement of the force transmitting screw changes the compression of the spring and thereby the position of the valve stem and valve plunger in opening direction or closing direction of the valve. The presetting screw provides a second regulating function of a double regulating balancing valve, namely in such a way that the presetting screw limits the movement of the force transmitting screw and thereby the position of the valve stem and valve plunger in opening direction of the valve. By operating the presetting screw the position of the same and thereby the limit of the valve plunger movement in opening direction of the valve can be changed.

Double regulating balancing valves known from practical use have the disadvantage that a disassembling of valve parts is required when the valve is to be upgraded with external devices. This results in the loss of the first regulating function and/or the second regulating function of the double regulating balancing valve.

A further disadvantage of double regulating balancing valves known from practical use is that they do not provide information about the stroke or position of the valve stem and thereby valve plunger.

Against this background, a novel double regulating balancing valve is provided.

According to the present invention within the hand wheel there is positioned a connector terminal to which an external device like an external actuator or external controller is mountable. The presetting screw and the force transmitting screw comprise each a through port through which a pushing element of said external device can extend when the external device is mounted on said connector terminal so that the external device can act on the valve stem and thereby on the spring.

The double regulating balancing valve according to the present invention allows an upgrade of the same with external devices without the need to disassemble valve parts which results in the loss of the first regulating function and/or the second regulating function of the double regulating balancing valve.

According to a preferred embodiment of the invention said insert body comprises an insert tube, whereby the force transmitting screw extends from the interior of the insert tube to the exterior of the same through at least one guiding slot of said insert tube. Such a design allows an easy operation of the valve insert from the outside by the hand wheel.

The spring is positioned in the interior of said insert tube. A first section of the valve stem to which the valve plunger is mounted extends through said interior of said insert tube. At least one second section of the valve stem extends from the interior of the insert tube to the exterior of the same through at least one guiding slot of said insert tube. The or each section second section extending through a respective guiding slot of said insert tube can be used to indicate and/or measure the position of the valve stem and thereby the position of the valve plunger. As a result the double regulating balancing valve provides information about the stroke or position of the valve stem and thereby valve plunger.

Preferred developments of the invention are provided by the dependent claims and the description which follows. Exemplary embodiments are explained in more detail on the basis of the drawing, in which:
- Figure 1: shows a cross sectional view of a double regulating balancing valve according to the invention;
- Figure 2: shows an exploded view of the double regulating balancing valve according to the invention;

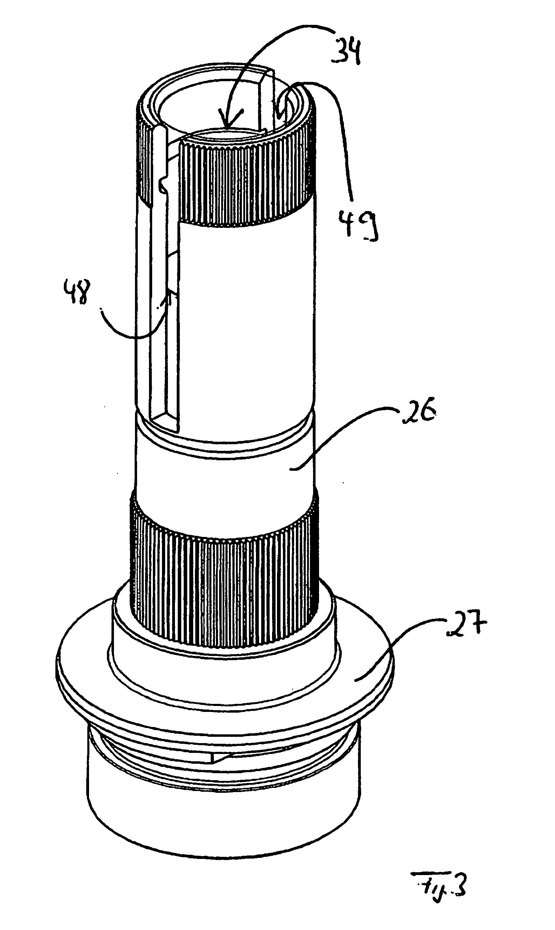

- Figure 3: shows a first detail, namely a valve insert body, of the double regulating balancing valve according to the invention;

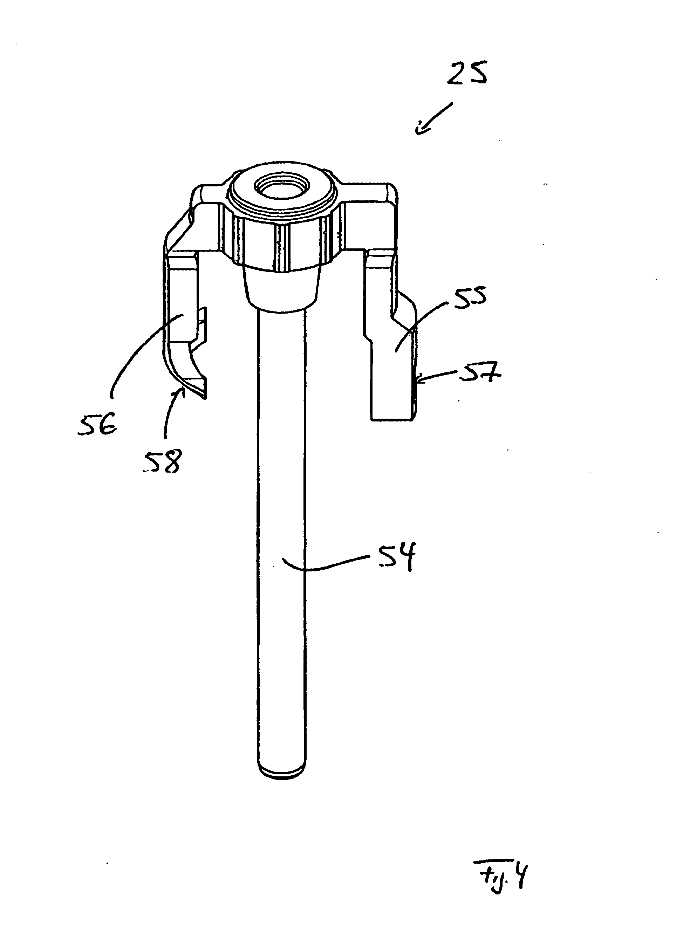

- Figure 4: shows a second detail, namely a valve stem, of the double regulating balancing valve according to the invention;
- Figure 5: shows a third detail, namely a hand wheel force transmitting screw, of the double regulating balancing valve according to the invention;
- Figure 6: shows a fourth detail, namely a presetting screw, of the double regulating balancing valve according to the invention;

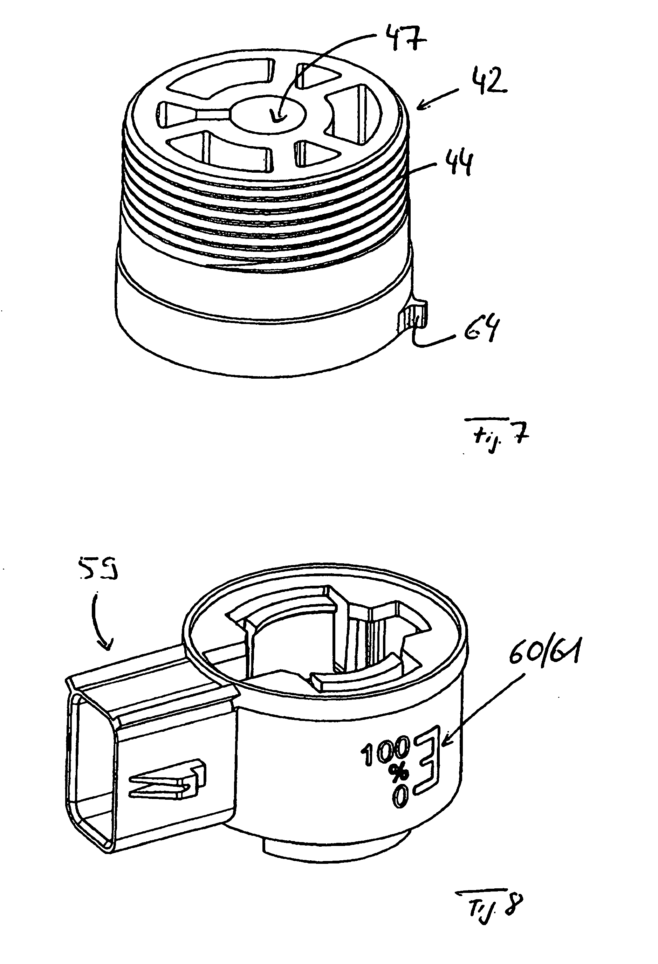

- Figure 7: shows a fifth detail, namely a connection interface, of the double regulating balancing valve according to the invention; and
- Figure 8: shows a further detail, namely a sensor socket, of the double regulating balancing valve according to the invention.

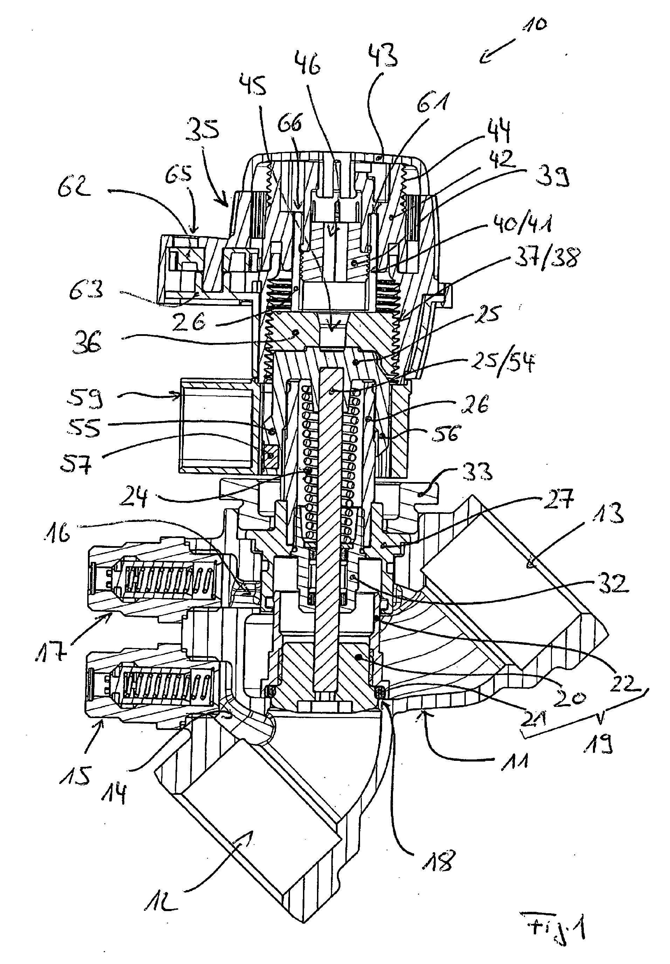

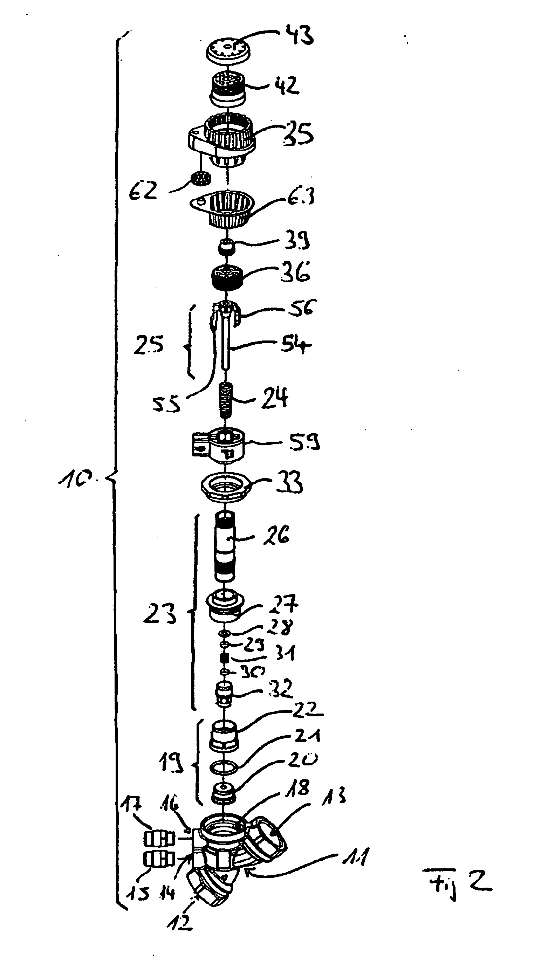

The present invention relates to a double regulating balancing valve. Figure 1 shows a cross section through a preferred embodiment of a double regulating balancing valve 10. Figure 2 shows an exploded view of the preferred embodiment of the double regulating balancing valve 10.

The double regulating balancing valve 10 comprises a valve housing 11. The valve housing 11 comprises an inlet 12, an outlet 13 and connection terminals for pressure test valves.

A first connection terminal 14 for a first pressure test valve 15 is connected to the inlet 12 so that the inlet pressure inside the inlet 12 of the double regulating balancing valve 10 is measureable by said first pressure test valve 15.

A second connection terminal 16 for a second pressure test valve 17 is connected to the outlet 13 so that the outlet pressure inside the outlet 13 of the double regulating balancing valve 10 is measureable by said second pressure test valve 17.

The valve housing 11 provides a valve seat 18. A valve plunger 19 acts together with the valve seat 18. The double regulating balancing valve 10 is closed when the valve plunger 19 is pressed against the valve seat 18. The double regulating balancing valve 10 is opened when the valve plunger 19 is lifted up from the valve seat 18.

The valve plunger 19 comprises a plunger body 20 carrying a sealing element 21 and a plunger housing 22 receiving the plunger body 20 and the sealing element 21. When the double regulating balancing valve 10 is closed the sealing element 21 of the valve plunger 19 is pressed against the valve seat 18. The sealing element 21 is provided by an O-ring.

The double regulating balancing valve 10 comprises a valve insert. Said valve insert is provided by an insert body 23, a spring 24 and a valve stem 25. The insert body 23 comprises an insert tube 26, an insert base 27, a washer 28, sealing elements 29 and 30, a distance holder 31 and an insert housing 32. Said insert housing 32 receives the washer 28, the sealing elements 29, 30 and the distance holder 31. The sealing elements 29 and 30 are provided by O-rings. The insert housing 32 receiving the washer 28, the sealing elements 29, 30 and the distance holder 31 is partially inserted into the insert base 27, namely at a first end of the insert base 27. At the opposite end of the insert base 27 the insert tube 26 is partially inserted into the insert base 27. The insert body 23 is partially inserted into the valve housing 10 and fixed at the valve housing 10 by a nut 33.

The spring 24 is positioned inside said insert body 23 of the valve insert, namely inside an interior 34 of said insert tube 26. The spring 24 contacts with a first end the washer 28 and with an opposite end the valve stem 25. A spring force provided by said spring 24 acts in such a way on the valve stem 25 to which the valve plunger 19 is mounted that the spring force tends to lift up the valve plunger 19 from the valve seat 18 and thereby tends to open the double regulating balancing valve 10.

The double regulating balancing valve 10 comprises a hand wheel 35 acting together with a force transmitting screw 36. The force transmitting screw 36 acts in such a way on the valve stem 25 and thereby on the spring 24 that the force transmitting screw 36 compresses the spring 24 against the spring force depending on the position or operation of the hand wheel 35. The hand wheel 35 provides a first regulating function of the double regulating balancing valve 10, namely in such a way that by operating, namely by rotating, the hand wheel 35 a movement of the force transmitting screw 36 is caused, whereby the movement of the force transmitting screw 36 changes the compression of the spring 24 and thereby the position of the valve stem 25 and valve plunger 19 in opening direction or in closing direction of the double regulating balancing valve 10.

When the hand wheel 35 is rotated in a first direction, the force transmitting screw 36 is caused to move in a first direction thereby increasing the compression of the spring 24 and thereby moving the valve stem 25 and valve plunger 19 in the closing direction of the double regulating balancing valve 10.

When the hand wheel 35 is rotated in a second, opposite direction, the force transmitting screw 36 is caused to move in a second, opposite direction thereby decreasing the compression of the spring 24 and thereby moving the valve stem 25 and valve plunger 19 in the opening direction of the double regulating balancing valve 10.

As shown in Figure 1, an outer section of the force transmitting screw 36 comprises an outer thread 37 which engages with an inner thread 38 of said hand wheel 35. The rotation of the hand wheel 35 thereby causes a linear movement of the force transmitting screw 36.

The double regulating balancing valve 10 comprises further a presetting screw 39 providing a stop for the force transmitting screw 36 in such a way that the position of the presetting screw 39 limits the movement of the force transmitting screw 36 and thereby of the valve stem 25 and the valve plunger 19 in the opening direction of the double regulating balancing valve 10. The presetting screw 39 provides a second regulating function of a double regulating balancing valve 10, namely in such a way that the presetting screw 39 limits the movement of the force transmitting screw 36 and thereby the position of the valve stem 29 and valve plunger 19 in the opening direction of the valve. By operating the presetting screw 39 the position of the same and thereby the limit of the valve plunger movement in the opening direction of the double regulating balancing valve 10 can be changed.

As shown in Figure 1, an outer section of the presetting screw 39 comprises an outer thread 40 which engages with an inner thread 41 of insert tube 26. The rotation presetting screw 39 causes a linear movement of same.

Within the hand wheel 35 there is positioned a connector terminal 42 to which an external device (not shown) like an external actuator or external controller is mountable.

The connector terminal 42 is positioned within a cavity of the hand wheel 35 and accessable after removal of a cap 43 from said hand wheel 35. The connector terminal 42 being positioned within said hand wheel 35 comprises an outer thread 44 to which an external device (not shown) having an inner thread is screwable.

The connector terminal 42 comprises slots 66 into which said insert tube 26 is partially inserted thereby clipping said connector terminal 42 onto said insert tube 26.

The presetting screw 39 and the force transmitting screw 36 comprise each a through port 45, 46 through which a pushing element (not shown) of said external device (not shown) can extend when the external device is mounted on said connector terminal 39. Further on, the connector terminal 42 comprises such a through port 47. When the double regulating balancing valve 10 is assembled, these through ports 45, 46 and 47 are aligned. With this design it is possible that the external device, namely the pushing element of the same, can act directly on the valve stem 25 and thereby on the on the spring 24 and thereby on the valve plunger 19 when the external device is mounted on the connector terminal 42.

This allows an upgrade of the double regulating balancing valve 10 with an external device without the need to disassemble valve parts which would result in the loss of the first regulating function and/or the second regulating function of the double regulating balancing valve 10.

As mentioned above, the spring 24 is positioned in the interior 34 of said insert tube 26. The force transmitting screw 36 which acts of the spring 24 through the valve stem 25 extends from the interior 34 of the insert tube 26 to the exterior of the same through at least one guiding slot 48, 49 of said insert tube 26.

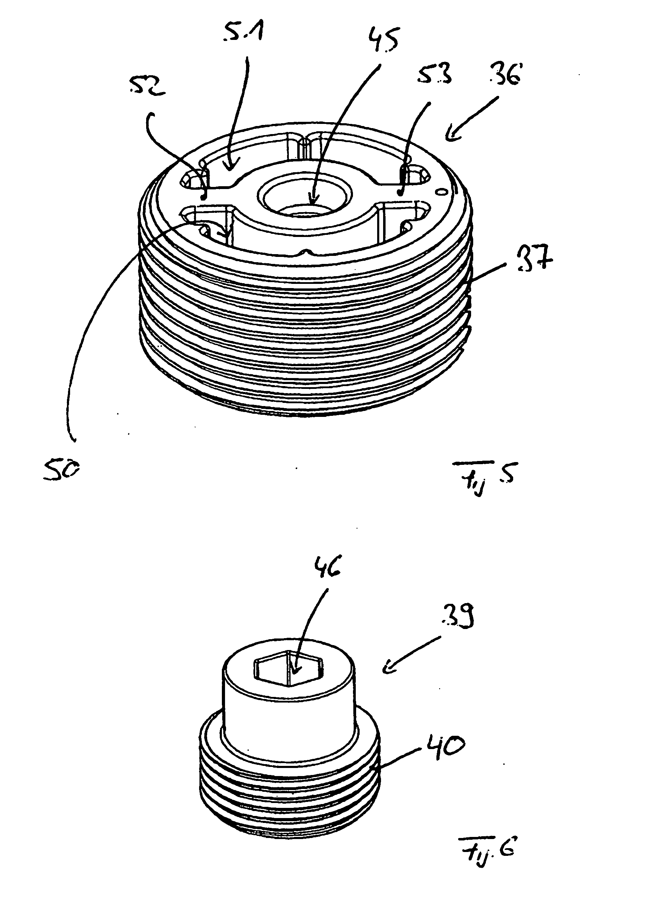

As can be best seen in Figure 5, the transmitting screw 36 comprises two through port 50, 51 being shaped like an arc of a circle and being separated from each other by bars 52, 53. These bars 52, 53 extend through said guiding slots 48, 49 of said insert tube 26. The outer thread 37 of the force transmitting screw 36 is positioned outside the interior 34 of said insert tube 26 allowing an engagement with the inner thread 38 of the hand wheel 35.

This allows an easy operation of the valve insert, namely of the valve stem 25 and spring 24, and thereby the valve plunger 19 from the outside of insert tube 26 by the hand wheel 35 through the force transmitting screw 36.

The valve stem 25 comprises a first section 54 to which the valve plunger 19 is mounted. This first section 54 of the valve stem 25 extends through said interior 34 of said insert tube 26. Further on, the valve stem 25 comprises at least one second section 55, 56 extending from the interior 34 of the insert tube 26 to the exterior of the same through the at least one guiding slot 48, 49 of said insert tube 26. In the shown embodiment of the double regulating balancing valve 10 the valve stem 25 comprises two such second sections 55, 56.

The second section 55 of the valve stem 25 carries a magnetic element 57, whereby a magnetic sensor (not shown) is mountable to a sensor socket 59 of the double regulating balancing valve 10 so that the magnetic sensor can detect the position of the magnetic element 57 attached to said second section 55 of said valve stem 25 and thereby the position of the valve stem 25 and thereby the position of the valve plunger 19.

A calculating device (not shown) can automatically calculate form the inlet pressure provided by said first pressure test valve 15 and from said outlet pressure provided by said second pressure test valve 17 and from said position of the valve plunger 19 provided by said magnetic sensor (not shown) the flow through the double regulating balancing valve 10.

The second section 56 of the valve stem 25 carries a pointer 58, whereby the pointer 58 visually indicates the position of the valve stem 25 and thereby the position of the valve plunger 19. The sensor socket 59 comprises at least one transparent portion 60 through which the pointer 58 is visible. Through this transparent portion 60 the pointer 58 can point to a scale 61 assigned to the surface of the sensor socket 59 thereby providing visible stroke information on the outer surface of the double regulating balancing valve 10.

As mentioned above, the double regulating balancing valve 10 can be opened and closed by the hand wheel 35 acting on the valve stem 25 through the force transmitting screw 36. Further on, the double regulating balancing valve 10 can be opened and closed by an external device being mounted on the connector terminal 42 and acting directly on the valve stem 25. After an external device is mounted on the connector terminal 42 the other functions of the double regulating balancing valve 10 are kept.

The force from the hand wheel 35 is transmitted to the valve stem 25 through the force transmitting screw 36, whereby the force transmitting screw 36 extends from the outside of the insert tube 26 to the inside of the insert tube 26 through the guiding slots 48, 49 of the insert tube 26.

Through these guiding slots 48, 49 do also extend the second sections 55, 56 of the valve stem 25 thereby allowing visual stroke information and automatic stroke measurement when a sensor is attached to the sensor socket 59.

The hand wheel 35 comprises a gear 62 positioned inside the hand wheel 35 and covered by a gear housing 63. Said gear 62 acts together with a protrusion 64 of the connector terminal 42 serving as contact point for the gear 62. After each full rotation of the hand wheel 35 the gear 62 is rotated by one incremental step. A scale assigned to the gear 62 is visible through an opening 65 of the hand wheel 35 thereby providing a visible indication of the hand wheel 35, namely of the full rotations performed by the hand wheel 35.

### List of reference signs

- 10: double regulating balancing valve
- 11: valve housing
- 12: inlet
- 13: outlet
- 14: first connection terminal
- 15: first pressure test valve
- 16: second connection terminal
- 17: second pressure test valve
- 18: valve seat
- 19: valve plunger
- 20: plunger body
- 21: sealing element
- 22: plunger housing
- 23: insert body
- 24: spring
- 25: valve stem
- 26: insert tube
- 27: insert base
- 28: washer
- 29: sealing element
- 30: sealing element
- 31: distance holder
- 32: insert housing
- 33: nut
- 34: interior
- 35: hand wheel
- 36: force transmitting screw
- 37: outer thread
- 38: inner thread
- 39: presetting screw
- 40: outer thread
- 41: inner thread
- 42: connector terminal
- 43: cap
- 44: outer thread
- 45: through port
- 46: through port
- 47: through port
- 48: guiding slot
- 49: guiding slot
- 50: through port
- 51: through port
- 52: bar
- 53: bar
- 54: first section
- 55: second section
- 56: second section
- 57: magnetic element
- 58: pointer
- 59: sensor socket
- 60: transparent portion
- 61: scale
- 62: gear
- 63: gear housing
- 64: protrusion
- 65: opening
- 66: slot

## Claims

1. Double regulating balancing valve, comprising:
a valve housing (11) providing a valve seat (18);
a valve plunger (19) acting together with the valve seat (18), whereby the valve is closed when the valve plunger (19) is pressed against the valve seat (18), and whereby the valve is opened when the valve plunger (19) is lifted up from the valve seat (18);
a valve insert comprising a spring (24) positioned inside an insert body (23), whereby a spring force provided by said spring (24) acts in such a way on a valve stem (25) to which the valve plunger (19) is mounted that the spring force tends to lift up the valve plunger (19) from the valve seat (18):
a hand wheel (35) acting together with a force transmitting screw (36), whereby the force transmitting screw (36) acts in such a way on the valve stem (25) and thereby on the spring (24) that the force transmitting screw (36) compresses the spring (24) against the spring force depending on the position of the hand wheel (35);
a presetting screw (39) providing a stop for the force transmitting screw (36) in such a way that the position of the presetting screw (39) limits the movement of the force transmitting screw (36) and thereby of the valve stem (25) in opening direction of the valve;
**characterized in that**
within said hand wheel (35) there is positioned a connector terminal (42) to which an external device like an external actuator or external controller is mountable;
said presetting screw (39) and said force transmitting screw (36) comprise each a through port (45, 46) through which a pushing element of said external device can extend when the external device is mounted on said connector terminal (42) so that the external device can act on the valve stem (25) and thereby on the spring (24).

2. Double regulating balancing valve as claimed in claim 1, **characterized in that** said connector terminal (42) being positioned within said hand wheel (35) comprises an outer thread (44) to which an external device having an inner thread is screwable.

3. Double regulating balancing valve as claimed in claim 1 or 2, **characterized in that** said connector terminal (42) being positioned within said hand wheel (35) is accessable after removal of a cap (43) from said hand wheel (35).

4. Double regulating balancing valve as claimed in one of claims 1 to 3, **characterized in that** said insert body (23) comprises an insert tube (26) having at least one guiding slot (48, 49).

5. Double regulating balancing valve as claimed in claim 4. **characterized in that** the spring (24) is positioned in the interior of said insert tube (26), whereby a first section (54) of the valve stem (25) to which the valve plunger (19) is mounted extends through said interior of said insert tube (26), and whereby at least one second section (55, 56) of the valve stem (25) extends from the interior of the insert tube (26) to the exterior of the same through the at least one guiding slot (48, 49) of said insert tube (26).

6. Double regulating balancing valve as claimed in claim 5, **characterized in that** a second section (56) carrying a pointer (58) extends through a guiding slot of said insert tube (26), whereby the pointer (58) visually indicates the position of the valve stem (25) and thereby the position of the valve plunger (19).

7. Double regulating balancing valve as claimed in claim 5 or 6, **characterized in that** a second section (55) carrying a magnetic element (57) extends through a guiding slot of said insert tube (26), whereby a magnetic sensor is mountable to a sensor socket (59) so that the magnetic sensor can detect the position of the magnetic element (57) attached to said second section (55) of said valve stem (25) and thereby the position of the valve stem (25) and thereby the position of the valve plunger (19).

8. Double regulating balancing valve as claimed in claim 7, **characterized in that** the valve body (11) comprises a first connection terminal (14) for a first pressure test valve (15) with which the inlet pressure inside an inlet (12) of the valve is measureable, that the valve body (11) comprises a second connection terminal (16) for a second pressure test valve (17) with which the outlet pressure inside an outlet (13) of the valve is measureable, and that the valve comprises a calculating device, which automatically calculates form the inlet pressure provided by said first pressure test valve (15) and from the outlet pressure provided by said second pressure test valve (17) and from the position of the valve plunger (19) provided by said magnetic sensor the flow through the valve.

9. Double regulating balancing valve as claimed in one of claims 4 to 8, **characterized in that** the force transmitting screw (36) extends from the interior of the insert tube (26) to the exterior of the same through the or each guiding slot (48, 49) of said insert tube (26).

10. Double regulating balancing valve as claimed in claim 9, **characterised in that** an outer section of the force transmitting screw (36) being positioned in the exterior insert tube (26) comprises an outer thread (37) which engages with an inner thread (38) of said hand wheel (35).

11. Double regulating balancing valve as claimed in one of claims 3 to 10, **characterized in that** said insert tube (26) comprises an inner thread (41) which engages with an outer thread (40) of said presetting screw (39).

12. Double regulating balancing valve as claimed in one of claims 3 to 11, **characterized in that** said connector terminal (42) comprises slots (66) into which said insert tube (26) is partially inserted thereby clipping said connector terminal (42) onto said insert tube (26).

## Patentansprüche

1. Strangabsperr- und regulierventil, aufweisend:
ein Ventilgehäuse (11), das einen Ventilsitz (18) bereitstellt;
einen Ventilkolben (19), der zusammen mit dem Ventilsitz (18) wirkt, wobei das Ventil geschlossen wird, wenn der Ventilkolben (19) gegen den Ventilsitz (18) gedrückt wird, und wobei das Ventil geöffnet wird, wenn der Ventilkolben (19) vom Ventilsitz (18) abgehoben wird;
einen Ventileinsatz, der eine Feder (24) aufweist, die innerhalb eines Einsatzkörpers (23) positioniert ist, wobei eine Federkraft, die durch die Feder (24) bereitgestellt wird, derart auf einen Ventilschaft (25), an dem der Ventilkolben (19) montiert ist, wirkt, dass die Federkraft dazu neigt, den Ventilkolben (19) vom Ventilsitz (18) abzuheben;
ein Handrad (35), das zusammen mit einer Kraftübertragungsschraube (36) wirkt, wobei die Kraftübertragungsschraube (36) derart auf den Ventilschaft (25) und dadurch auf die Feder (24) wirkt, dass die Kraftübertragungsschraube (36) die Feder (24) in Abhängigkeit von der Position des Handrads (35) gegen die Federkraft zusammendrückt;
eine Voreinstellschraube (39), die einen Anschlag für die Kraftübertragungsschraube (36) bereitstellt, derart, dass die Position der Voreinstellschraube (39) die Bewegung der Kraftübertragungsschraube (36) und dadurch des Ventilschafts (25) in der Öffnungsrichtung des Ventils beschränkt;
**dadurch gekennzeichnet, dass**
innerhalb des Handrads (35) ein Verbinderanschluss (42) positioniert ist, an dem eine externe Vorrichtung wie ein externes Betätigungselement oder eine externe Steuerung montiert werden kann;
die Voreinstellschraube (39) und die Kraftübertragungsschraube (36) jeweils eine Durchgangsöffnung (45, 46) aufweisen, durch welche sich ein Stoßelement der externen Vorrichtung erstrecken kann, wenn die externe Vorrichtung am Verbinderanschluss (42) montiert ist, so dass die externe Vorrichtung auf den Ventilschaft (25) und dadurch auf die Feder (24) wirken kann.

2. Strangabsperr- und regulierventil nach Anspruch 1, **dadurch gekennzeichnet, dass** der Verbinderanschluss (42), der innerhalb des Handrads (35) positioniert ist, ein Außengewinde (44) aufweist, an das eine externe Vorrichtung mit einem Innengewinde geschraubt werden kann.

3. Strangabsperr- und regulierventil nach Anspruch 1 oder 2, **dadurch gekennzeichnet, dass** der Verbinderanschluss (42), der innerhalb des Handrads (35) positioniert ist, nach Entfernung einer Kappe (43) vom Handrad (35) zugänglich ist.

4. Strangabsperr- und regulierventil nach einem der Ansprüche 1 bis 3, **dadurch gekennzeichnet, dass** der Einsatzkörper (23) ein Einsatzrohr (26) mit mindestens einem Führungsschlitz (48, 49) aufweist.

5. Strangabsperr- und regulierventil nach Anspruch 4, **dadurch gekennzeichnet, dass** die Feder (24) im Inneren des Einsatzrohrs (26) positioniert ist, wobei sich ein erster Abschnitt (54) des Ventilschafts (25), an dem der Ventilkolben (19) montiert ist, durch das Innere des Einsatzrohrs (26) erstreckt, und wobei sich mindestens ein zweiter Abschnitt (55, 56) des Ventilschafts (25) von der Innenseite des Einsatzrohrs (26) durch den mindestens einen Führungsschlitz (48, 49) des Einsatzrohrs (26) zur Außenseite desselben erstreckt.

6. Strangabsperr- und regulierventil nach Anspruch 5, **dadurch gekennzeichnet, dass** sich ein zweiter Abschnitt (56), der einen Zeiger (58) trägt, durch einen Führungsschlitz des Einsatzrohrs (26) erstreckt, wobei der Zeiger (58) die Position des Ventilschafts (25) und dadurch die Position des Ventilkolbens (19) sichtbar anzeigt.

7. Strangabsperr- und regulierventil nach Anspruch 5 oder 6, **dadurch gekennzeichnet, dass** sich ein zweiter Abschnitt (55), der ein Magnetelement (57) trägt, durch einen Führungsschlitz des Einsatzrohrs (26) erstreckt, wobei ein Magnetsensor auf einem Sensorsockel (59) montiert werden kann, so dass der Magnetsensor die Position des Magnetelements (57), das am zweiten Abschnitt (55) des Ventilschafts (25) befestigt ist, und dadurch die Position des Ventilschafts (25) und dadurch die Position des Ventilkolbens (19) erkennen kann.

8. Strangabsperr- und regulierventil nach Anspruch 7, **dadurch gekennzeichnet, dass** der Ventilkörper (11) einen ersten Verbindungsanschluss (14) für ein erstes Druckprüfventil (15) aufweist, mit dem der Einlassdruck innerhalb eines Einlasses (12) des Ventils gemessen werden kann, dass der Ventilkörper (11) einen zweiten Verbindungsanschluss (16) für ein zweites Druckprüfventil (17) aufweist, mit dem der Auslassdruck innerhalb eines Auslasses (13) des Ventils gemessen werden kann, und dass das Ventil eine Rechenvorrichtung aufweist, die aus dem durch das erste Druckprüfventil (15) bereitgestellten Einlassdruck und aus dem durch das zweite Druckprüfventil (17) bereitgestellten Auslassdruck und aus der durch den Magnetsensor bereitgestellten Position des Ventilkolbens (19) automatisch den Durchfluss durch das Ventil berechnet.

9. Strangabsperr- und regulierventil nach einem der Ansprüche 4 bis 8, **dadurch gekennzeichnet, dass** sich die Kraftübertragungsschraube (36) von der Innenseite des Einsatzrohrs (26) durch den oder jeden Führungsschlitz (48, 49) des Einsatzrohrs (26) zur Außenseite desselben erstreckt.

10. Strangabsperr- und regulierventil nach Anspruch 9, **dadurch gekennzeichnet, dass** ein äußerer Abschnitt der Kraftübertragungsschraube (36), der an der Außenseite des Einsatzrohrs (26) positioniert ist, ein Außengewinde (37) aufweist, das in ein Innengewinde (38) des Handrads (35) eingreift.

11. Strangabsperr- und regulierventil nach einem der Ansprüche 3 bis 10, **dadurch gekennzeichnet, dass** das Einsatzrohr (26) ein Innengewinde (41) aufweist, das in ein Außengewinde (40) der Voreinstellschraube (39) eingreift.

12. Strangabsperr- und regulierventil nach einem der Ansprüche 3 bis 11, **dadurch gekennzeichnet, dass** der Verbinderanschluss (42) Schlitze (66) aufweist, in die das Einsatzrohr (26) teilweise eingeführt wird, wodurch der Verbinderanschluss (42) auf das Einsatzrohr (26) geklemmt wird.

## Revendications

1. Soupape d'équilibrage de régulation double, comprenant:
un boîtier de soupape (11) fournissant un siège de soupape (18);
un plongeur de soupape (19) agissant conjointement avec le siège de soupape (18), la soupape étant fermée lorsque le plongeur de soupape (19) est pressé contre le siège de soupape (18), et la soupape étant ouverte lorsque le plongeur de soupape (19) est soulevé du siège de soupape (18);
un insert de soupape comprenant un ressort (24) positionné à l'intérieur d'un corps d'insert (23), une force de ressort fournie par ledit ressort (24) agissant de telle sorte sur une tige de soupape (25) sur laquelle est monté le plongeur de soupape (19) que la force de ressort ait tendance à soulever le plongeur de soupape (19) depuis le siège de soupape (18);
une molette (35) agissant conjointement avec une vis de transfert de force (36), la vis de transfert de force (36) agissant de telle sorte sur la tige de soupape (25) et donc sur le ressort (24) que la vis de transfert de force (36) comprime le ressort (24) à l'encontre de la force du ressort en fonction de la position de la molette (35);
une vis de préréglage (39) assurant une butée pour la vis de transfert de force (36) de telle sorte que la position de la vis de préréglage (39) limite le mouvement de la vis de transfert de force (36) et donc de la tige de soupape (25) dans la direction d'ouverture de la soupape; **caractérisée en ce que**
dans ladite molette (35) est positionnée une borne de connecteur (42) sur laquelle peut être monté un dispositif externe tel qu'un actionneur externe ou un contrôleur externe;
ladite vis de préréglage (39) et ladite vis de transfert de force (36) comprennent un orifice traversant (45, 46) à travers lequel un élément pousseur dudit dispositif externe peut s'étendre lorsque le dispositif externe est monté sur ladite borne de connecteur (42) de telle sorte que le dispositif externe puisse agir sur la tige de soupape (25) et donc sur le ressort (24).

2. Soupape d'équilibrage de régulation double selon la revendication 1, **caractérisée en ce que** ladite borne de connecteur (42) positionnée dans ladite molette (35) comprend un filetage externe (44) sur lequel peut être vissé un dispositif externe ayant un filetage interne.

3. Soupape d'équilibrage de régulation double selon la revendication 1 ou 2, **caractérisée en ce que** ladite borne de connecteur (42) positionnée dans ladite molette (35) est accessible après le retrait d'un capuchon (43) de ladite molette (35).

4. Soupape d'équilibrage de régulation double selon l'une quelconque des revendications 1 à 3, **caractérisée en ce que** ledit corps d'insert (23) comprend un tube d'insert (26) ayant au moins une fente de guidage (48, 49).

5. Soupape d'équilibrage de régulation double selon la revendication 4, **caractérisée en ce que** le ressort (24) est positionné à l'intérieur dudit tube d'insert (26), une première section (54) de la tige de soupape (25) sur laquelle est monté le plongeur de soupape (19) s'étend à travers ledit intérieur dudit tube d'insert (26) et au moins une deuxième section (55, 56) de la tige de soupape (25) s'étendant depuis l'intérieur du tube d'insert (26) jusqu'à l'extérieur de celui-ci à travers l'au moins une fente de guidage (48, 49) dudit tube d'insert (26).

6. Soupape d'équilibrage de régulation double selon la revendication 5, **caractérisée en ce qu'**une deuxième section (56) portant un pointeur (58) s'étend à travers une fente de guidage dudit tube d'insert (26), le pointeur (58) indiquant visuellement la position de la tige de soupape (25) et donc la position du plongeur de soupape (19).

7. Soupape d'équilibrage de régulation double selon la revendication 5 ou 6, **caractérisée en ce qu'**une deuxième section (55) portant un élément magnétique (57) s'étend à travers une fente de guidage dudit tube d'insert (26), un capteur magnétique pouvant être monté sur une douille de capteur (59) de telle sorte que le capteur magnétique puisse détecter la position de l'élément magnétique (57) attaché à ladite deuxième section (55) de ladite tige de soupape (25) et donc la position de la tige de soupape (25) et donc la position du plongeur de soupape (19).

8. Soupape d'équilibrage de régulation double selon la revendication 7, **caractérisée en ce que** le corps de soupape (11) comprend une première borne de connexion (14) pour une première soupape d'essai de pression (15), avec laquelle la pression d'entrée à l'intérieur d'une entrée (12) de la soupape peut être mesurée, **en ce que** le corps de soupape (11) comprend une deuxième borne de connexion (16) pour une deuxième soupape d'essai de pression (17) avec laquelle la pression de sortie à l'intérieur d'une sortie (13) de la soupape peut être mesurée, et **en ce que** la soupape comprend un dispositif de calcul, qui calcule automatiquement le débit s'écoulant à travers la soupape à partir de la pression d'entrée fournie par ladite première soupape d'essai de pression (15) et à partir de la pression de sortie fournie par ladite deuxième soupape d'essai de pression (17) et à partir de la position du plongeur de soupape (19) fournie par ledit capteur magnétique.

9. Soupape d'équilibrage de régulation double selon l'une quelconque des revendications 4 à 8, **caractérisée en ce que** la vis de transfert de force (36) s'étend depuis l'intérieur du tube d'insert (26) jusqu'à l'extérieur de celui-ci à travers la ou chaque fente de guidage (48, 49) dudit tube d'insert (26).

10. Soupape d'équilibrage de régulation double selon la revendication 9, **caractérisée en ce qu'**une section externe de la vis de transfert de force (36) positionnée dans le tube d'insert extérieur (26) comprend un filetage externe (37) qui s'engage avec un filetage interne (38) de ladite molette (35).

11. Soupape d'équilibrage de régulation double selon l'une quelconque des revendications 3 à 10, **caractérisée en ce que** ledit tube d'insert (26) comprend un filetage interne (41) qui s'engage avec un filetage externe (40) de ladite vis de préréglage (39).

12. Soupape d'équilibrage de régulation double selon l'une quelconque des revendications 3 à 11, **caractérisée en ce que** ladite borne de connecteur (42) comprend des fentes (66) dans lesquelles est partiellement inséré ledit tube d'insert (26) pour ainsi encliqueter ladite borne de connecteur (42) sur ledit tube d'insert (26).
